# EUROPÄISCHE PATENTANMELDUNG

(11) **EP 1 462 397 A1**
(43) Veröffentlichungstag der Anmeldung: **29.09.2004**
(21) Anmeldenummer: 03006933.0
(22) Anmeldetag: 26.03.2003
(51) Int. Cl.: B65G 47/52

(54) **Sortierfördersystem zum Sortieren und Transportieren von Objekten mit gekrümmten Auflageflächen**

(71) Anmelder: SIEMENS AKTIENGESELLSCHAFT, 80333 München (DE)
(72) Erfinder: Mignano, Paolo, 28043 Bellinrago Novarese (NO) (IT)

(57) **Zusammenfassung**

Die Erfindung bezieht sich auf ein Sortierfördersystem zum Sortieren und Transportieren von Objekten (10) mit gekrümmten Auflageflächen, wie etwa Flaschen. Es ist ein Sortierförderer (1) vorgesehen, der aus einer Reihe umlaufender, gekoppelter Trageeinheiten (3) mit darauf angeordneten Auflagen (4) besteht, die an mindestens einem Zuförderer (11a, 11b) vorbeibewegt und dort mit den zu sortierenden Objekten (10) beladen werden, um anschließend an einer Reihe von Entladestationen (16) vorbeibewegt zu werden, wo die Entladung der zu sortierenden Objekte (10) stattfindet. Um eine hinsichtlich der Längsorientierung der Objekte (10) geordnete Entladung zu gewährleisten, ist erfindungsgemäß vorgesehen, dass in Längsrichtung des Zuförderers (11a, 11b) mindestens ein Ladekanal (12) ausgebildet ist, in dem die Objekte (10) längsorientiert einführbar sind und durch den die Objekte (10) in ausgerichteter Lage den Auflagen (4) der Trageinheiten (3) zuleitbar sind, auf denen Zellen (2) zur orientierten Aufnahme jeweils mindestens eines der zugeführten Objekte (10) ausgebildet sind.

## Beschreibung

Die Erfindung betrifft ein Sortierfördersystem zum Sortieren und Transportieren von Objekten mit gekrümmten Auflageflächen, insbesondere zylindrischen Objekten, Flaschen oder dergleichen, bestehend aus einer umlaufenden Reihe von gekoppelten Trageinheiten mit darauf angeordneten Auflagen, die an mindestens einem Zuförderer vorbeibewegt und dort mit den zu sortierenden Objekten beladen werden, um anschließend an einer Reihe von Entladestationen vorbeibewegt zu werden, um dort die zu sortierenden Objekte zu entladen.

Ein Förderer für die Sortierung von Stückgut ist aus der deutschen Patentschrift DE 44 47 396 C1 bekannt. Dieser Förderer besteht gewöhnlich aus einer Vielzahl von aneinander gekoppelten und auf Fahrschienen verfahrbaren Wagen, die eine endlose Förderstrecke bilden. Die Wagen bestehen im wesentlichen aus einem Fahrrahmen und einer hierauf an Stützelementen gelagerten Auflage für das Transportgut, die entweder um eine in Fahrtrichtung und horizontal verlaufende Kippachse für die Abgabe des Stückgutes aus einer horizontalen Transportstellung in eine Kippstellung nach einer der beiden Seiten schwenkbar ist, oder aus einem quer zur Transportrichtung umlaufenden Band, mit dem das Transportgut seitlich ausschleusbar ist. Für die Sortierung des Stückgutes sind entlang des Förderers Zielstationen angeordnet, wobei das Stückgut jeweils in eine vorgewählte Zielstation durch eine Kippbewegung der Tragschale oder eine Querbewegung des Bandes einsortiert wird.

Problematisch wird das Sortieren und Transportieren von Objekten, die keine stabile Auflagefläche aufweisen und somit weder auf dem Zuförderer noch auf den Auflagen der Trageinheiten sicher aufliegen. Solche Objekte können beispielsweise liegend transportierte zylindrische Objekte oder Flaschen sein, deren gekrümmte Auflagefläche die Beibehaltung einer gezielten Ausrichtung beim Transport und ein stabiles Aufliegen auf dem Transportmittel verhindert. Durch Rollen und Drehen (z. B. bei bauchigen Behältern) kann sich deren Ausrichtung leicht verändern. Um derartige Objekte dennoch mit im wesentlichen herkömmlichen Sortierfördersystemen transportieren und sortieren zu können, bestand die Aufgabe der vorliegenden Erfindung darin, ein Sortierfördersystem entsprechend zu gestalten.

Zur Lösung der Aufgabe wird vorgeschlagen, in Längsrichtung des Zuförderers mindestens einen Ladekanal auszubilden, in den die Objekte längs orientiert einführbar sind und durch den die Objekte in ausgerichteter Lage den Auflagen der Trageinheiten zuleitbar sind, auf denen Zellen zur orientierten Aufnahme jeweils mindestens eines der zugeführten Objekte ausgebildet sind. Da die Instabilität derartiger Objekte sich bereits beim Aufgeben auf den Zuförderer zu den eigentlichen Trageinheiten des Sortierförderers zeigt, sieht die Erfindung vor, diese Objekte bereits orientiert in den Ladekanal einzuführen, in dem sich die beim Eingeben ausgerichtete Lage der Objekte grundsätzlich nicht mehr ändert. Der Aufnahmekanal führt die Objekte zu den Trageinheiten, deren Auflagen so ausgestaltet sind, dass die Objekte ebenfalls in ihrer Lage orientiert in Zellen abgelegt werden, die den Transport in definierter Lage ermöglichen. Mit anderen Worten: weder während des Zuförderns noch während des Transportes auf dem Sortierförderer können sich die Objekte ungewollt frei bewegen oder wegrollen, sie sind nicht nur in dem Ladekanal ausgerichtet geführt sondern werden auch in den Zellen der Trageinheiten in Bezug auf ihre Längsorientierung in festgelegter Lage vorwärts bewegt.

In einer Ausgestaltung der Erfindung ist vorgesehen, dass der Ladekanal seitlich und in Förderrichtung der Objekte durch Seitenflanken mit geringem Reibwiderstand begrenzt ist, deren lichter Abstand größer als die charakteristische Querabmessung des größten zu fördernden Objektes und kleiner als deren Länge ist, wobei der Boden des Ladekanals durch das Fördermittel, also z. B. durch den Gurt oder die Förderrollen des Zuförderers gebildet ist. Der erfindungsgemäße Ladekanal führt die Objekte, beispielsweise die Flaschen, seitlich in ihrer im Regelfall längsorientierten Ausrichtung, in der das jeweilige Objekt aufgegeben wurde. Der Ladekanal kann auf einen herkömmlichen Gurtförderer aufgesetzt werden, wobei er am Rahmen des Förderers befestigt wird, so dass der Gurt des Förderers unter ihm bewegbar ist.

Besonders günstig ist es, wenn nach einem weiteren Merkmal der Erfindung die beiden Seitenflanken des Ladekanals aus in Förderrichtung dicht hintereinander, jeweils in einer geschlossenen Reihe angeordneten, um vertikale Achsen frei drehbaren Leitrollen gebildet ist. Diese Leitrollen haben einen extrem niedrigen Widerstand, insbesondere wenn zylindrische Rollen mit hoher Schwungmasse und geringem Rollwiderstand verwendet werden. Die Objekte, die sich mit ihrer Orientierungsachse aus der Förderrichtung herausbewegen wollen, stoßen seitlich gegen die Seitenflanken und werden durch die Rollen geführt weitergeleitet. Auf diese Weise wird sichergestellt, dass das Objekt in der richtigen Ausrichtung transportiert wird.

Günstigerweise sind die Leitrollen mit ihren oberen Enden an einer den Zuförderer übergreifenden Tragstruktur gelagert. Diese Tragstruktur ist gegebenenfalls leicht zu entfernen, so dass auch die Möglichkeit besteht, z. B. einen normalen Bandförderer mit dieser Tragstruktur nachträglich zu versehen und umgekehrt, einen Zuförderer mit Ladekanal zu einem normalen Förderband zurückzurüsten.

In einer besonders günstigen Ausgestaltung der Erfindung ist vorgesehen, dass die auf den Auflagen der Trageinheiten angeordneten Zellen die Objekte in einer Lage positionieren, in der die Längsachse des Objektes jeweils parallel zur Entladerichtung ausgerichtet ist. Die Zellen bieten eine sichere und stabile Auflage für die Objekte, die ansonsten von den Auflagen herunterrollen oder sich darauf verdrehen würden. Dies ist besonders deshalb wichtig, weil die Objekte zum Sortieren in geordneter Weise und exakt ausgerichtet der Entladeeinrichtung zugeführt werden müssen, deshalb sollte die Ausrichtung der Längsachse des Objektes jeweils parallel zur Entladeeinrichtung bereits in den Zellen erfolgen.

Um die durch den Ladekanal herantransportierten Objekte ordnungsgemäß auf die Auflagen und in die dort angeordneten Zellen überführen zu können, ist nach einem weiteren Merkmal der Erfindung vorzugsweise vorgesehen, dass die auf den Auflagen anordneten Zellen eine in Richtung des Zuförderers trichterförmig erweiterte Öffnung aufweisen, die sich in der Beladerichtung der Objekte verjüngt. Da die Beladung der Trageinheiten nicht im Stillstand erfolgt sondern bei an dem Zuförderer vorbeigeführten Trageinheiten, muss eine ausreichend große Öffnung vorhanden sein, um die Objekte vom Ladekanal in die Zellen zu überführen. Andererseits sollen die Objekte in den Zellen exakt ausgerichtet in einer vorher festgelegten Orientierung zum Liegen kommen. Das wird durch die trichterförmige Öffnung erreicht, die sich nach hinten verschmälert und somit das Objekt in eine bestimmte Ausrichtung zwingt.

Vorzugsweise ist jede Zelle auf den Auflagen beidseitig der dem Zuförderer zugewandten Öffnung durch quer zur Transportrichtung der Trageinheiten verlaufenden Seitenflanken und durch eine in Transportrichtung ausgerichtete Rückwand kastenförmig begrenzt, wobei die in Transportrichtung der Trageinheiten nacheilende Seitenflanke selbst oder durch ein eingelegten Formteil eine das Objekt gegen die gegenüberliegende Seitenflanke leitende Trichterführung bildet. Das Objekt wird, sobald es den Ladekanal verlassen hat, gezwungen, sich in der Zelle so auszurichten, wie es die Seitenflanken vorgeben, vorzugsweise wird das Objekt sich mit seiner Längsrichtung quer zur Förderrichtung in eine Richtung orientieren, die der Entladerichtung in der Entladestation entspricht.

Nach einer weiteren Ausgestaltung der Erfindung ist vorgesehen, dass als Teil des Zuförderers im Anschlussbereich zu den Trageinheiten ein geschwindigkeitssteuerbares Übergabeband vorgesehen ist, mit dem die Objekte auf die erforderliche Beladegeschwindigkeit beschleunigbar sind. Da die Übergabe der Objekte auf die Trageinheiten in einem relativ kurzen Zeitintervall von statten gehen muss, sorgt ein geschwindigkeitssteuerbares Übergabeband dafür, dass das Objekt im richtigen Moment mit der notwendigen Geschwindigkeit übergeben wird. Die erforderliche Geschwindigkeit hängt dabei selbstverständlich wesentlich ab von der Transportgeschwindigkeit der Trageinheiten und von der Größe der Öffnung von deren Zellen.

Je nachdem, ob nach der Erfindung die Trageinheiten als Querbandförderer ausgebildet sind, deren Querbänder unterhalb der Zellen richtungsumkehrbar umlaufen (wenn Beladung und Entladung zur gleichen Seite erfolgen sollen) und die Auflagen für die Objekte bilden oder ob die Trageinheiten als Kippschalenförderer ausgebildet sind, ist die Beschleunigung des Übergabebandes einzustellen. Wenn erfindungsgemäß die Querbänder eines Querbandförderers zur Ausrichtung der Objekte innerhalb der Zellen gezielt quer zur Transportrichtung der Trageinheiten antreibbar sind, so kann eine Ausrichtung der Objekte mit Hilfe der Querbänder und der Seitenflanken der Zellen erfolgen. Gleichzeitig ermöglichen es die Querbänder, die Objekte aus den Zellen auszuschleusen. Dies erfolgt im Fall einer Ausschleusung an der Beladeseite einfach, indem die Querbänder reversierend angetrieben werden.

Sind nach einem weiteren Merkmal der Erfindung die Trageinheiten als Kippschalenförderer ausgebildet, so wird durch Neigen der Auflagen auf den Trageinheiten das Objekt aus der Zelle herausrutschen, sobald die Trageinheit am Ausschleuseband vorbeibewegt wird. Die Entladestation kann dabei als Rutsche ausgebildet sein, es ist jedoch auch denkbar die Entladestation zu motorisieren und die Geschwindigkeit der angetriebenen Entladegurte gleich oder größer der Entladegeschwindigkeit des Objektes aus der jeweiligen Zelle einzustellen. Auf diese Weise wird ein geordnetes Austragen der Objekte aus der Zelle ermöglicht, so dass die Objekte von der Aufgabe bis zur Sortierung in den einzelnen Entladestationen stets definiert und exakt ausgerichtet transportiert werden, ein Vorteil, der insbesondere beim Sortieren von Flaschen sehr große Bedeutung hat.

Die Erfindung wird nachfolgend an einem in der Figur dargestellten Ausführungsbeispiel näher erläutert. Es zeigen in schematisierter Form:
- Figur 1: eine ausschnittsweise Draufsicht auf ein erfindungsgemäßes Sortierfördersystem,
- Figur 2: einen Abschnitt eines Zuförderers mit Ladekanal,
- Figur 3: einen Zuführkanal,
- Figur 4: einen Zuführkanal mit Führungsrollen,
- Figur 5 und 6: eine Trageinheit des Sortierförderers und
- Figur 7: eine Trageinheit des Sortierförderers an einer motorisierten Entladeeinrichtung.

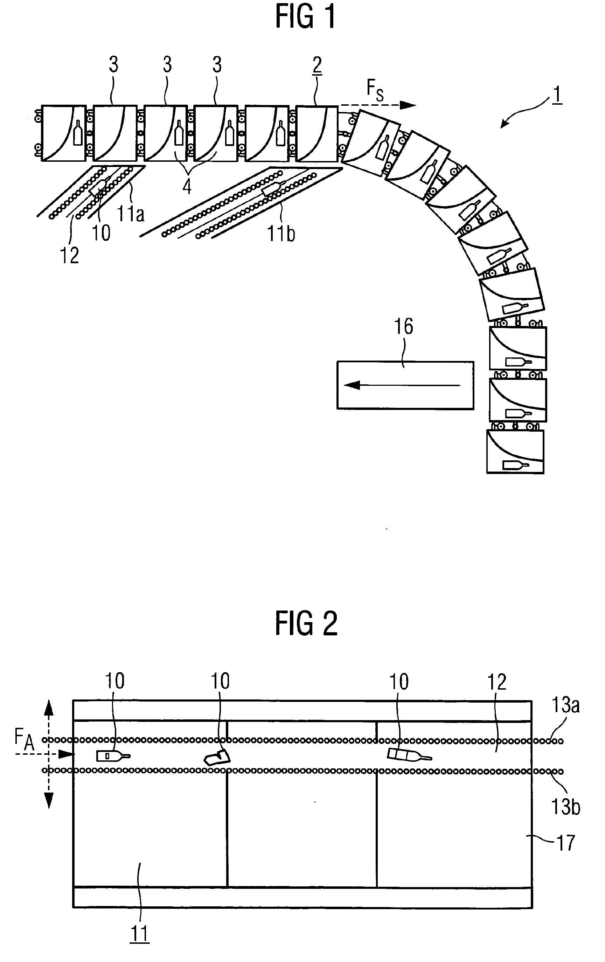

In Figur 1 ist das erfindungsgemäße Sortierfördersystem mit einem Sortierförderer 1 dargestellt. Dieser Sortierförderer 1 besteht aus einer Vielzahl von umlaufenden aneinander gekoppelten Trageinheiten 3 mit darauf jeweils angeordneten Auflagen 4. Diese Auflagen 4 können beispielsweise jeweils als Förderband eines Querförderers oder als sog. Kippschalen eines Kippschalenförderers ausgebildet sein. Zur Beladung des Sortierförderers 1 mit Objekten 10 sind im vorliegenden Fall zwei Zuförderer 11a, 11b vorgesehen, die vorzugsweise als Bandförderer ausgebildet sind, aber beispielsweise auch Rollenförderer sein könnten. Die Zuförderer 11a, 11b sind in jeweils unterschiedlichen Winkeln an die als gestrichelter Pfeil angedeutete Förderrichtung Fₛ des Sortierförderers angestellt. Mit dem Bezugszeichen 16 ist eine Entladeeinrichtung bezeichnet, von denen im Regelfall mehrere vorhanden sind und die beispielsweise als einfache Rutschen, also antriebslos ausgebildet sind. Wie nachfolgend im einzelnen erläutert wird, ist es die Aufgabe des erfindungsgemäßen Sortierfördersystems, die in ihrer Längsausrichtung gezielt orientierten Objekte 10 in geordneter Weise entgegenzunehmen (Beladung), diese geordnet zu einer vorgegebenen Entladestelle zu transportieren und dort in ebenfalls geordneter Weise hinsichtlich der Orientierung wieder abzugeben (Entladung). Bei den Objekten 10 handelt es sich jeweils um Gegenstände mit gekrümmten Auflageflächen, die beispielsweise zylindrisch oder bauchig geformt sind, so dass sie auf der horizontalen Unterlage in Folge der Einwirkung von Kräften bei der Förderung durch Drehung oder Rollen ihre Längsorientierung unkontrolliert verändern können. In einem herkömmlichen Förder- und Sortiersystem wäre daher eine geordnete Übergabe der Objekte, d. h. mit jeweils gleicher Längsorientierung, nicht möglich.

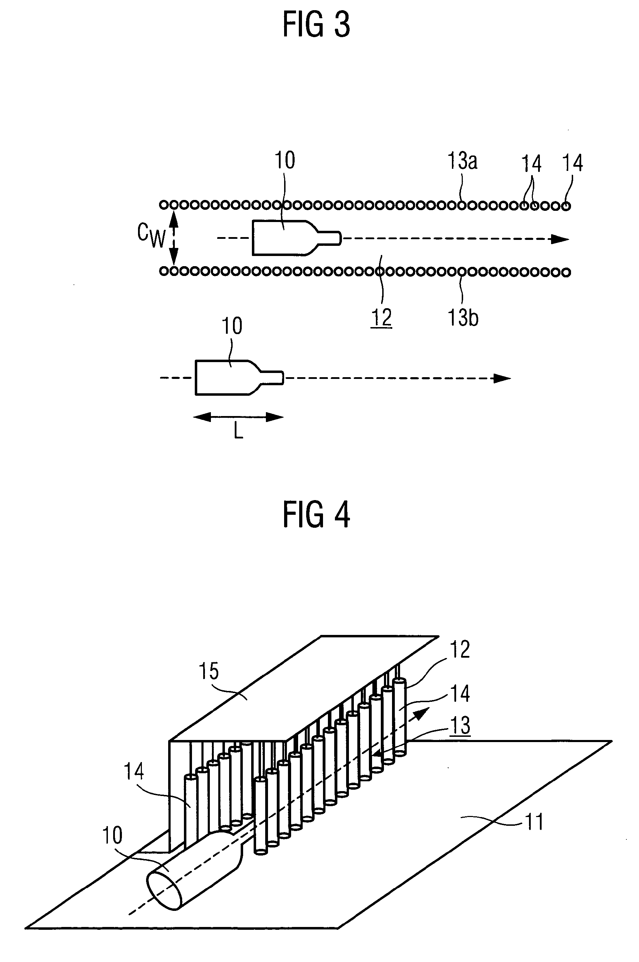

Die Figuren 2 bis 4 verdeutlichen, wie durch die Erfindung eine geordnete Zuförderung mit jeweils gleicher Längsorientierung der einzelnen Objekte erfolgen kann. Dazu ist in der Figur 2 als Ausschnitt ein aus mehreren Förderabschnitten bestehender Zuförderer 11 dargestellt, auf dem mehrere instabil gelagerte Objekte 10 in Förderrichtung F_{A} transportiert werden. Um die Objekte 10, die von Anfang an mit ihrer Längsachse in Förderrichtung F_{A} aufgegeben worden sind, in dieser Orientierung zu halten, ist auf dem Fördermittel des Zuförderers 11 ein Ladekanal 12 ausgebildet, dessen Seitenflanken mit 13a, 13b bezeichnet sind. Die Breite C_{W} des Ladekanals 12 (Figur 3) ist so bemessen, dass sie deutlich geringer ist als die Länge L des kürzesten zu transportierenden Objekts 10, das im vorliegenden Fall eine Flasche ist. Selbstverständlich ist die Ladekanalbreite C_{W} zumindest geringfügig größer als die größte Breite der zu transportierenden Objekte 10. Während des Transports durch den Zuförderer 11 können die Objekte 10 allenfalls zwischen den beiden Seitenflanken 13a, 13b des Ladekanals 12 hin und her rollen und/oder sich um einen geringen Winkel mit ihrer Längsachse innerhalb der Förderebene verdrehen, bis sie an einer der Seitenflanken 13a, 13b anstoßen und an einer weiteren Änderung ihrer Längsorientierung gehindert werden. Eine geringfügige Änderung dieser Längsorientierung ist unschädlich. Die Seitenflanken 13a, 13b weisen einen geringen Reibwiderstand auf und können beispielsweise aus glatten Seitenwänden mit geringem Reibkoeffizienten bestehen.

Vorzugsweise sind die Seitenflanken 13, wie aus dem Prinzipbild in Figur 4 hervorgeht, durch eine Vielzahl von dicht hintereinander angeordneten drehbaren Leitrollen 14 gebildet, deren Drehachse vertikal orientiert ist, also im wesentlichen senkrecht auf der Förderebene des Zuförderers 11 steht. Die Leitrollen 14 sind an ihren oberen Enden jeweils an einer den Zuförderer 11 übergreifenden Tragstruktur 15 gelagert. Vorzugsweise ist diese Tragstruktur 15 so ausgebildet, dass sie leicht auf den Zuförderer 11 aufgesetzt und ebenso einfach wieder von diesem entfernt werden kann, so dass der Zuförderer 11 im Bedarfsfall entweder als üblicher Förderer oder aber als spezieller Förderer zur geordneten Förderung von instabilen Objekten 10 eingesetzt werden kann.

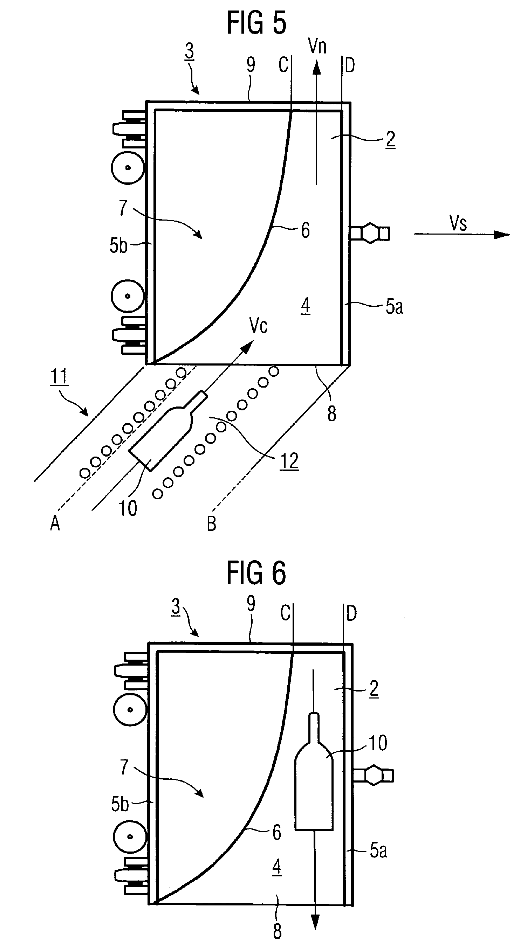

Der Vorgang der Beladung der Trageinheiten 3 mit den Objekten 10 wird durch Figur 5 verdeutlicht. Darin ist lediglich eine einzige Trageinheit 3 dargestellt, die mit einer Fördergeschwindigkeit Vₛ des Sortierförderers 1 an dem Zuförderer 11 vorbeigeführt wird. Auf den Trageinheiten 3 sind Zellen 2 zur Aufnahme von Objekten 10 in ausgerichteter Lage ausgebildet. Dabei soll die Längsachse eines Objektes 10 jeweils parallel zur vorgesehenen Entladerichtung liegen, was im vorliegenden Fall eine Lage senkrecht zur Förderrichtung des Sortierförderers 1 bedeutet. Die auf der Auflage 4 der Trageinheit 3 angeordnete Zelle 2 weist eine in Richtung des Zuförderers 11 trichterförmig erweiterte Öffnung 8 auf, die sich in Beladerichtung verjüngt.

Im vorliegenden Fall ist die Auflage 4 das umlaufend antreibbare Förderband eines Querbandförderers. Dieses bildet den Boden der Zelle 2. Die Zelle 2 ist zu beiden Seiten der dem Zuförderer 11 zugewandten Öffnung 8 durch quer zur Transportrichtung der Trageinheit 3 verlaufende Seitenflanken 5a, 5b und durch eine in Transportrichtung ausgerichtete Rückwand 9 kastenförmig begrenzt. Innerhalb dieses "Kastens" ist eine Trichterführung 6 ausgebildet, die entweder durch die in Transportrichtung der Trageinheit 3 nacheilende Seitenflanke 5 oder wie im vorliegenden Fall durch ein eingelegtes Formteil 7 gebildet wird.

Während der Übergabe eines Objekts 10 vom Zuförderer 11 an die Zelle 2 der Trageinheit 3 wird die Trageinheit 3 mit der Geschwindigkeit Vₛ bewegt, während der Zuförderer eine schräg zur Fördergeschwindigkeit Vₛ gerichtete Fördergeschwindigkeit V_{C} aufweist und der Querbandförderer der Trageinheit 3 mit einer Geschwindigkeit Vₙ angetrieben ist, deren Richtung senkrecht zur Fördergeschwindigkeit Vₛ steht. Der Zuförderer 11 synchronisiert die Verladung des Objekts 10 auf die Zelle 2 so, dass das Objekt beim unmittelbaren Annähern an die Trageinheit 3 mit seiner Längsachse im Bereich der gestrichelten Linien A und B liegt und somit sicher die Öffnung 8 des Trichters der Zelle 2 trifft. Zur Unterstützung der Synchronisation kann der unmittelbar an den Sortierförderer 1 anschließende Teil des Zuförderers 11 als besonderes Übergabeband 17 (schematisch in Figur 2 dargestellt) gestaltet sein, dessen Geschwindigkeit steuerbar ist, um das Objekt 10 gezielt auf die erforderliche Ladegeschwindigkeit V_{C} zu beschleunigen.

Beim Übertritt vom Zuförderer 11 in die Zelle 2 ist aufgrund der Trichterführung 6 für das Objekt 10 keine Gefahr gegeben, dass dieses seine Orientierung unkontrolliert ändert. Vielmehr ergibt sich zwangsläufig eine Ausrichtung der Längsachse des Objekts 10 parallel zur Richtung der Querband-Fördergeschwindigkeit Vₙ, also eine Lage wie sie in Figur 6 dargestellt ist. Damit liegt das Objekt 10 zwischen den Linien C und D.

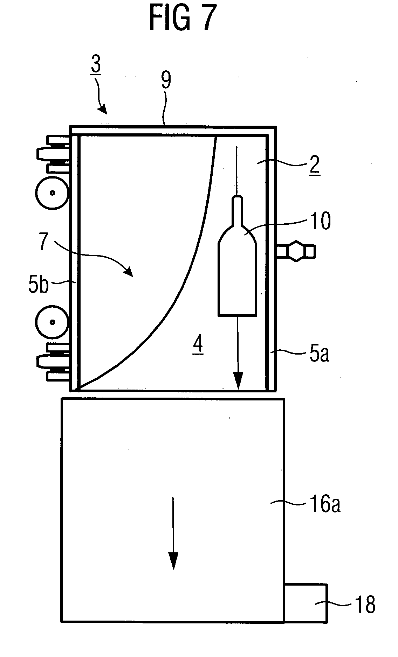

Im Ausführungsbeispiel ist vorgesehen, dass die Entladung des Objekts 10 zur selben Seite hin erfolgt, wie die Beladung. Dies ist in Figur 6 durch einen entsprechenden Pfeil in Richtung der Längsachse des Objekts 10 angedeutet. Als Entladeinrichtung 16 kann beispielsweise die bereits in Zusammenhang mit Figur 1 erwähnte Rutsche eingesetzt werden. Alternativ kann auch, wie dies schematisch in Figur 7 dargestellt ist, eine motorisierte Entladeeinrichtung etwa in Form eines Ausschleusebands 16a verwendet werden. Der Antriebsmotor ist mit dem Bezugszeichen 18 versehen. Zur Betätigung des Ausschleusens ist es lediglich erforderlich, den Querbandförderer der Trageinheit 3 in gegenüber dem Beladevorgang umgekehrter Richtung anzutreiben. Auf der kurzen Förderstrecke des Querförderbands bleibt die Orientierung der Längsachse des Objekts 10 praktisch unverändert, so dass eine entsprechend geordnete Übergabe an das Ausschleuseband 16a oder die Entladung 16 gewährleistet ist.

### Bezugszeichenliste

- 1: Sortierförderer
- 2: Zelle
- 3: Trageinheiten
- 4: Auflage
- 5a, 5b: Seitenflanken der Zelle
- 6: Trichterführung
- 7: Formteil
- 8: Öffnung (Trichter)
- 9: Rückwand
- 10: Objekt
- 11, 11a, 11b: Zuförderer
- 12: Ladekanal
- 13, 13a, 13b: Seitenflanken des Ladekanals
- 14: Leitrollen
- 15: Tragstruktur
- 16: Entladeeinrichtung (z. B. Rutsche)
- 16a: Ausschleuseband
- 17: geschwindigkeitssteuerbares Übergabeband
- 18: Antriebsmotor Entladeeinrichtung

- Fₛ: Förderrichtung Sorter
- Fₐ: Förderrichtung Zuförderer
- L: Objektlänge
- C_{W}: Breite des Ladekanals
- V_{C}: Fördergeschwindigkeit Zuförderer
- Vₙ: Fördergeschwindigkeit Querband der Trageinheit
- Vₛ: Fördergeschwindigkeit Sortierförderer

## Patentansprüche

1. Sortierfördersystem zum Sortieren und Transportieren von Objekten (10) mit gekrümmten Auflageflächen, insbesondere von zylindrischen Objekten, Flaschen oder dergl., bestehend aus einer umlaufenden Reihe von gekoppelten Trageinheiten (3) mit darauf angeordneten Auflagen (4), die an mindestens einem Zuförderer (11, 11a, 11b) vorbeibewegt und dort mit den zu sortierenden Objekten (10) beladen werden, um anschließend an einer Reihe von Entladestationen (16, 16a) vorbeibewegt zu werden, um dort die zu sortierenden Objekte (10) zu entladen,
**dadurch gekennzeichnet,**
**dass** in Längsrichtung des Zuförderers (11, 11a, 11b) mindestens ein Ladekanal (12) ausgebildet ist, in den die Objekte (10) längsorientiert einführbar sind und durch den die Objekte (10) in ausgerichteter Lage den Auflagen (4) der Trageinheiten (3) zuleitbar sind, auf denen Zellen (2) zur orientierten Aufnahme jeweils mindestens eines der zugeführten Objekte (10) ausgebildet sind.

2. Sortierfördersystem nach Anspruch 1,
**dadurch gekennzeichnet,**
**dass** der Ladekanal (12) seitlich und in Förderrichtung der Objekte (10) durch Seitenflanken (13, 13a, 13b) mit geringem Reibwiderstand begrenzt ist, deren lichter Abstand größer als die charakteristische Querabmessung des größten zu fördernden Objektes (10) und kleiner als deren Länge ist, wobei der Boden des Ladekanals (12) durch das Fördermittel des Zuförderers (11, 11a, 11b), insbesondere durch den Gurt eines Gurtförderers gebildet ist.

3. Sortierfördersystem nach Anspruch 1 oder 2,
**dadurch gekennzeichnet,**
**dass** die beiden Seitenflanken (13, 13a, 13b) des Ladekanals (12) aus in Förderrichtung dicht hintereinander, jeweils in einer geschlossenen Reihe angeordneten, um vertikale Achsen frei drehbaren Leitrollen (14) gebildet sind.

4. Sortierfördersystem nach Anspruch 3,
**dadurch gekennzeichnet,**
**dass** die Leitrollen (14) mit ihren oberen Enden an einer den Zuförderer (11, 11a, 11b) übergreifenden Tragstruktur (15) gelagert sind.

5. Sortierfördersystem nach einem der Ansprüche 1 bis 4,
**dadurch gekennzeichnet,**
**dass** die auf den Auflagen (4) der Trageinheiten (3) angeordneten Zellen (2) die Objekte (10) in einer Lage positionieren, in der die Längsachse des Objektes (10) jeweils parallel zur Entladerichtung ausgerichtet ist.

6. Sortierfördersystem nach einem der Ansprüche 1 bis 5,
**dadurch gekennzeichnet,**
**dass** die auf den Auflagen (4) angeordneten Zellen (2) eine in Richtung des Zuförderers (11, 11a, 11b) trichterförmig erweiterte Öffnung (8) aufweisen, die sich in der Beladerichtung verjüngt.

7. Sortierfördersystem nach einem der Ansprüche 1 bis 6,
**dadurch gekennzeichnet,**
**dass** jede Zelle (2) auf den Auflagen (4) beidseitig der dem Zuförderer (11, 11a, 11b) zugewandten Öffnung (8) durch quer zur Transportrichtung der Trageinheiten (3) verlaufende Seitenflanken (5a, 5b) und durch eine in Transportrichtung ausgerichtete Rückwand (9) kastenförmig begrenzt ist, wobei die in Transportrichtung der Trageinheiten (3) nacheilende Seitenflanke (5b) selbst oder durch ein eingelegtes Formteil (7) eine das Objekt gegen die gegenüberliegende Seitenflanke (5a) leitende Trichterführung (6) bildet.

8. Sortierfördersystem nach einem der Ansprüche 1 bis 7,
**dadurch gekennzeichnet,**
**dass** als Teil des Zuförderers (11) im Anschlussbereich zu den Trageinheiten (3) ein geschwindigkeitssteuerbares Übergabeband (17) vorgesehen ist, mit dem die Objekte (10) auf die erforderliche, von der Abmessung und Transportgeschwindigkeit der Trageinheiten (3) abhängigen Beladegeschwindigkeit beschleunigbar sind.

9. Sortierfördersystem nach einem der Ansprüche 1 bis 8,
**dadurch gekennzeichnet,**
**dass** die Trageinheiten (3) als Querbandförderer ausgebildet sind, deren Querbänder unterhalb der Zellen (2) umlaufend antreibbar sind und die Auflage (4) für die Objekte (10) bilden.

10. Sortierfördersystem nach Anspruch 9,
**dadurch gekennzeichnet,**
**dass** die Querbänder zur Ausrichtung der Objekte (10) innerhalb der Zellen (2) gezielt antreibbar sind.

11. Sortierfördersystem nach einem der Ansprüche 9 oder 10,
**dadurch gekennzeichnet,**
**dass** die Querbänder zum Ausschleusen der Objekte (10) aus den Zellen (2) reversierbar sind.

12. Sortierfördersystem nach einem der Ansprüche 1 bis 8,
**dadurch gekennzeichnet,**
**dass** die Trageinheiten (3) als Kippschalen eines Kippschalenförderers ausgebildet sind.

13. Sortierfördersystem nach einem der Ansprüche 1 bis 12,
**dadurch gekennzeichnet,**
**dass** die Entladestationen (16) als Rutschen ausgebildet sind.

14. Sortierfördersystem einem der Ansprüche 1 bis 12,
**dadurch gekennzeichnet,**
**dass** die Entladestationen (16a) motorisierte Gurtförderer sind und die Geschwindigkeit der angetriebenen Entladegurte gleich oder größer als die Entladegeschwindigkeit des Objektes (10) aus der jeweiligen Zelle (2) ist.
